# EUROPÄISCHE PATENTANMELDUNG

(11) **EP 3 922 333 A1**
(43) Veröffentlichungstag der Anmeldung: **15.12.2021**
(21) Anmeldenummer: 20178845.2
(22) Anmeldetag: 08.06.2020
(51) Int. Cl.: B01D 29/01, A61C 17/06, B01D 29/05, B01D 46/00

(54) **FILTEREINHEIT FÜR EINE SAUGVORRICHTUNG UND SAUGVORRICHTUNG**

(71) Anmelder: BPR Swiss GmbH, 3672 Oberdiessbach (CH)
(72) Erfinder: MAURER, Marc, 3600 Thun (CH); MAURER, Marcel, 2560 Nidau (CH); STRAUCH, Patrick, 3512 Walkringen (CH)
(74) Vertreter: Rutz & Partner

(57) **Zusammenfassung**

Die Filtereinheit (1), die insbesondere für den Einsatz mit einer Saugvorrichtung im medizinischen Bereich vorgesehen ist, umfasst ein Filtergehäuse (11), das einen Aufnahmeraum (10) umschliesst, in dem ein Filterelement (6) gehalten ist, und das eingangsseitig einen Gehäuseboden (12) aufweist, an den auf der vom Aufnahmeraum (10) abgewandten Aussenseite eine Eingangsleitung (14) angeschlossen ist, durch die ein zu filterndes Medium (MG) in den Aufnahmeraum (10) einführbar ist. Erfindungsgemäss ist auf der dem Aufnahmeraum (10) zugewandten Innenseite des Gehäusebodens (12) wenigstens ein in den Aufnahmeraum (10) hinein ragendes Distanzelement (121) vorgesehen, durch das zwischen dem eingesetzten Filterelement (6) und dem Gehäuseboden (12) ein Diffusionsraum (100) freigehalten wird.

## Beschreibung

Die Erfindung betrifft eine Filtereinheit und eine Saugvorrichtung mit einer solchen Filtereinheit insbesondere für medizinische Zwecke.

Saugvorrichtungen werden in zahlreichen Bereichen der Industrie und der Medizin eingesetzt. Eine gattungsgemässe Saugvorrichtung ist z.B. aus der EP3172439B1 bekannt. Mit dieser Saugvorrichtung kann bei einem medizinischen Eingriff ein Medium, das üblicherweise eine Flüssigkeitskomponente und Feststoffpartikel umfasst, durch eine Absaugleitung abgesaugt und in einen Behälter transferiert werden, an den eine mit einer Saugpumpe verbundene Ansaugleitung angeschlossen ist. Im Behälter wird das abgesaugte Medium in eine flüssige Komponente, gegebenenfalls versetzt mit den Feststoffpartikeln, und in eine gasförmige Komponente aufgeteilt. Die flüssige Komponente verbleibt mit den Feststoffpartikeln im Behälter und die gasförmige Komponente wird durch die Ansaugleitung zu einer Filtereinheit geführt, in der die Raumhygiene beeinträchtigende und potenziell gesundheitsgefährdende Partikel ausgefiltert werden.

Aus der EP3172439B1 ist bekannt, dass es besonders wichtig ist, das Medium mit hoher Saugkraft anzusaugen und die gasförmige Komponente mit möglichst hoher Strömungsgeschwindigkeit durch die Filtereinheit zu treiben. Zu diesem Zweck umfasst die Saugvorrichtung eine als Strahlpumpe, insbesondere als Venturi-Pumpe oder als Ejektor-Pumpe, ausgebildete erste Saugeinheit und eine als Verdrängerpumpe oder Gebläsepumpe ausgebildete zweite Saugeinheit. Mit den beiden Saugeinheiten wird in der Ansaugleitung ein entsprechend hoher Unterdruck erzeugt.

Durch die Verwendung von zwei Saugeinheiten resultieren grössere Abmessungen der Saugvorrichtung. Allgemein ist es hingegen erwünscht, dass Apparate und Vorrichtungen insbesondere im medizinischen Bereich eine hohe Leistung und trotzdem möglichst schlanke Dimensionen aufweisen.

Nur wenn ein genügend grosses Volumen einer gasförmigen Komponente in gegebener Zeit durch die Filtereinheit getrieben werden kann, ist auch die Saugkraft unverändert hoch. Um dies anzustreben, wäre es möglich, Anschlussleitungen mit möglichst grossem Querschnitt einzusetzen, die z.B. den Querschnitt des Filters aufweisen. Dies ist normalerweise aber nicht möglich, da die Abmessungen der Leitungen, welche die gasförmige Komponente führen, aufgrund eingeschränkter Platzverhältnisse und gegebener Industriestandards beschränkt sind.

Der vorliegenden Erfindung liegt daher die Aufgabe zugrunde, eine mit einer Filtereinheit ausgerüstete verbesserte Saugvorrichtung insbesondere für medizinische Zwecke zu schaffen. Ferner ist eine verbesserte Filtereinheit für eine solche Saugvorrichtung zu schaffen.

Die Saugvorrichtung, welche mit einer oder auch mit zwei Saugeinheiten ausgerüstet sein kann, soll eine erhöhte Saugwirkung aufweisen, ohne dass deren Abmessungen spürbar vergrössert werden.

Eine erhöhte Saugleistung und/oder ein erhöhter Durchfluss der gasförmigen Komponente sollen zudem erreicht werden können, ohne die Abmessungen der Filtereinheit und der gasführenden Leitungen zu erhöhen.

Die Filtereinheit soll bei gegebener Saugleistung der Saugvorrichtung einen höheren Mediendurchfluss erlauben. Zudem soll die Filterleistung der Filtereinheit verbessert werden.

Die Saugvorrichtung und die Filtereinheit sollen mit reduziertem Wartungsaufwand und möglichst mit reduzierter Leistung betrieben werden können. Weiterhin soll die Lebensdauer der Filtereinheit verbessert werden.

Diese Aufgabe wird mit einer Filtereinheit und einer Saugvorrichtung gelöst, welche die in Anspruch 1 und Anspruch 14 angegebenen Merkmale aufweisen. Vorteilhafte Ausgestaltungen der Erfindung sind in weiteren Ansprüchen angegeben.

Die Filtereinheit, die insbesondere für den Einsatz mit einer Saugvorrichtung im medizinischen Bereich vorgesehen ist, umfasst ein Filtergehäuse, das einen Aufnahmeraum umschliesst, in dem ein Filterelement gehalten ist, und das eingangsseitig einen Gehäuseboden aufweist, an den auf der vom Aufnahmeraum abgewandten Aussenseite eine Eingangsleitung angeschlossen ist, durch die ein zu filterndes Medium in den Aufnahmeraum einführbar ist.

Erfindungsgemäss ist auf der dem Aufnahmeraum zugewandten Innenseite des Gehäusebodens wenigstens ein in den Aufnahmeraum hinein ragendes Distanzelement vorgesehen, durch das zwischen dem eingesetzten Filterelement und dem Gehäuseboden ein Diffusionsraum freigehalten wird.

Die Abmessungen des Diffusionsraums sind derart gewählt, dass das durch die Eingangsleitung in das Filtergehäuse einströmende oder hinein geförderte Medium sich innerhalb des Diffusionsraums vorzugsweise über den gesamten Querschnitt des Filterelements verteilen und dieses durchfliessen kann, was mit verschiedenen Vorteilen verbunden ist. Das durch die Eingangsleitung zugeführte Medium ist typischerweise gasförmig. Die erfindungsgemässe Konstruktion der Filtereinheit kann hingegen auch für Filtereinheiten vorgesehen werden, die von einer Flüssigkeit durchströmt werden.

Der Diffusionsraum weist vorzugsweise zumindest annähernd denselben Querschnitt auf, wie der Aufnahmeraum oder das in die Filtereinheit eingesetzte Filterelement. Hingegen kann der Diffusionsraum nur eine minimale Höhe oder Länge aufweisen, mit der jedoch sichergestellt wird, dass die Diffusion des einströmenden Mediums ungehindert erfolgen kann. Bei einem gasförmigen Medium genügt bereits eine minimale Höhe oder Länge des Diffusionsraums, weshalb kaum eine Vergrösserung des Volumens des Filtergehäuses resultiert.

Die erfindungsgemässe Filtereinheit kann daher mit geringen Abmessungen realisiert werden. Eine verbesserte Saugleistung und ein erhöhter Durchfluss können zudem erzielt werden, ohne den Querschnitt der gasführenden Leitungen zu erhöhen. Hingegen wird mit der erfindungsgemässen Lösung praktisch derselbe Effekt erzielt, wie bei der Verwendung von Anschlussleitungen mit einem Querschnitt, welcher etwa dem Querschnitt des Filterelements entspricht.

Vorteilhafterweise kann der Gehäuseboden eben ausgebildet werden, sodass dieser und somit das gesamte Eingangsteil der Filtereinheit praktisch keinen Raum in Anspruch nimmt.

Aufgrund der Realisierung eines Diffusionsraums wird das Filterelement vom Medium über den gesamten Querschnitt und über die gesamte Länge zumindest annähernd gleichmässig durchströmt. Auf diese Weise kann das Filterelement einen optimalen Nutzen entfalten. Die eingangsseitige Apertur des Filterelements ist maximal, weshalb auch der durch das Filterelement verursachte Strömungswiderstand auf ein Minimum reduziert wird. Dieselbe Strömung kann daher mit reduzierter Leistung erreicht werden.

Durch die Öffnung der Apertur wird das Filterelement eingangsseitig nicht nur über den gesamten Querschnitt genutzt, sondern auch über den gesamten Querschnitt belastet, wodurch eine Reduktion der Belastung pro Volumeneinheit des Filterelements resultiert. Ausgefilterte Partikel konzentrieren sich nicht eingangsseitig an einem Bruchteil des Querschnitts des Filterelements, sondern werden gleichmässig über den gesamten Querschnitt des Filterelements abgelagert. Entsprechend resultieren in dem vom Medium durchflossenen Eingangsbereich wesentlich reduzierte Belastungen. Dadurch wird verhindert, dass das Filterelement über die gesamte Länge ungleich belastet und der Eingangsbereich des Filterelements während des Betriebs frühzeitig mit ausgefilterten Partikeln überlastet wird, welche die durchströmte Filterzone sättigen und einen zusätzlichen Strömungswiderstand bilden. Mit der erfindungsgemässen Lösung wird der Eingangsbereich des Filterelements nicht stärker belastet als die anderen Filterbereiche. Es wird daher verhindert, dass ein Austausch des Filterelements erforderlich ist, weil eine bestimmte Zone stärker belastet und früher gesättigt ist. Ein Austausch des Filterelements ist erst notwendig, wenn dieses über das gesamte Volumen gleichmässig eine maximal zulässige Belastung erreicht hat.

In vorzugsweisen Ausgestaltungen ist das wenigstens eine Distanzelement ringförmig oder spiralförmig ausgebildet. In einer weiteren vorzugsweisen Ausgestaltung sind mehrere rippenförmige Distanzelemente vorgesehen.

Das Distanzelement oder die Distanzelemente sind vorzugsweise konzentrisch zur Längsachse der Filtereinheit oder zur Längsachse des eingesetzten Filterelements angeordnet, damit dieses gleichmässig gestützt wird. Die Eingangsleitung ist zumindest im Anschlussbereich vorzugsweise koaxial zur Längsachse des eingesetzten Filterelements angeordnet.

Sofern rippenförmige Distanzelemente vorgesehen sind, so verlaufen diese vorzugsweise gleichmässig zueinander beabstandet. Vorzugsweise sind die rippenförmigen Distanzelemente radial oder geneigt zu einer radialen Ausrichtung angeordnet.

Die Distanzelemente sind vorzugsweise einstückig am Gehäuseboden angeformt. Der Gehäuseboden oder das gesamte Filtergehäuse können somit einstückig aus Kunststoff geformt sein.

Die Höhe, mit der das Distanzelement oder die Distanzelemente in den Aufnahmeraum hineinragen, liegt vorzugsweise im Bereich von 1 mm - 10 mm. Vorzugsweise sind die Höhe, mit der das Distanzelement oder die Distanzelemente in den Aufnahmeraum hineinragen, und die Festigkeit des Filterelements aufeinander abgestimmt, sodass der Diffusionsraum auch bei einer Deformation, gegebenenfalls einem Aufquellen, des Filterelements von diesem nicht ausgefüllt wird und die Diffusion des einströmenden Mediums ungehindert auf den gesamten Querschnitt des Filterelements erfolgen kann.

Die Breite des Distanzelements oder der Distanzelemente ist vorzugsweise um einen Faktor im Bereich von 0.5 - 2.5 grösser oder kleiner gewählt als die Höhe des Distanzelements oder der Distanzelemente. Auf diese Weise wird sichergestellt, dass das Filterelement einerseits in Distanz gehalten und andererseits nur wenig abgedeckt wird.

Um die freie Diffusion des Mediums im Diffusionsraum weiter zu optimieren, sind das Distanzelement oder die Distanzelemente vorzugsweise mit Durchbrüchen oder Öffnungen versehen. Das gasförmige Medium kann durch die Durchbrüche und Öffnungen leicht hindurch treten während das Filterelement noch immer stabil gehalten ist.

Das Filtergehäuse weist vorzugsweise eine Seitenwand oder Seitenwände auf, die zur spielfreien Aufnahme des Filterelements, das vorzugsweise einen polygonalen oder kreisförmigen Querschnitt aufweist, geeignet sind. Vorzugsweise schliesst das Filterelement dicht an die Seitenwand oder Seitenwände an, sodass das Medium die Filtereinheit ausschliesslich innerhalb des Filterelements durchläuft. In bevorzugten Ausgestaltungen wird das Filterelement mittels eines Klebstoffs im Filtergehäuse gehalten und/oder peripher abgedichtet.

In vorzugsweisen Ausgestaltungen ist das Filtergehäuse ausgangsseitig mit einem vorzugsweise ringförmigen Halteelement lösbar verbunden, welches einerseits das Filterelement in Position hält und andererseits das gasförmige Medium durch eine vom Halteelement zumindest teilweise umschlossene Öffnung passieren lässt. Das Halteelement ist vorzugsweise durch Gewindeelemente oder Rastelemente lösbar mit der Seitenwand oder den Seitenwänden des Filtergehäuses verbunden.

Die erfindungsgemässe Filtereinheit kann vorteilhaft an Saugvorrichtungen angeschlossen werden, mittels denen Flüssigkeit und/oder Feststoffpartikel während medizinischen oder zahnmedizinischen Eingriffen abgesaugt werden.

Saugvorrichtungen dieser Art umfassen vorzugsweise einen Behälter, der einerseits mit einer vom Anwender bedienten Absaugleitung und andererseits mit einer Ansaugleitung verbunden ist, die über eine Saugeinheit oder Pumpe mit der Filtereinheit verbunden ist. Im Behälter wird das Medium in eine flüssige Komponente und in eine gasförmige Komponente aufgeteilt. Die flüssige Komponente verbleibt im Behälter und die gasförmige Komponente wird weiter zur Filtereinheit gefördert. In der Filtereinheit werden Restpartikel aus dem Gasstrom entfernt, sodass gereinigte Luft aus der Filtereinheit austritt, welche die Raumhygiene nicht mehr gefährdet.

Nachfolgend wird die Erfindung anhand von Zeichnungen näher erläutert. Dabei zeigt:
- Fig. 1: eine erfindungsgemässe Saugvorrichtung mit einem Behälter 3, der einerseits mit einer Absaugleitung 31, durch die eine Medium M ansaugbar ist, das im Behälter 3 in eine flüssige Komponente MF und in eine gasförmige Komponente MG aufgeteilt wird, und andererseits mit einer Ansaugleitung 32 verbunden ist, die an eine Saugeinheit 2 angeschlossen ist, welche die gasförmige Komponente MG einer Filtereinheit 1 zuführt;
- Fig. 2a: in einem Längsschnitt die Filtereinheit 1 von Fig. 1 in einer vorzugsweisen Ausgestaltung mit einem zylindrischen Filtergehäuse 11, das ausgangsseitig mit einem Haltering 13 verbunden ist und das eingangsseitig einen Gehäuseboden 12 aufweist, an den eine Eingangsleitung 14 angeschlossen ist und der mit wenigstens ein in den Aufnahmeraum 10 des Gehäuses 11 hinein ragendes ringförmiges Distanzelement 121 aufweist, durch das zwischen einem eingesetzten Filterelement 6 und dem Gehäuseboden 12 ein Diffusionsraum 100 freigehalten wird;
- Fig. 2b: die Filtereinheit 1 von Fig. 2a nach Entnahme des Filterelements 6;
- Fig. 2c: die Filtereinheit 1 von Fig. 2a ohne Haltering 13;
- Fig. 3: die Filtereinheit 1 von Fig. 2a von der Eingangsseite her gesehen mit dem teilweise weggeschnittenen Gehäuseboden 12 und mit dem ringförmigen Distanzelement 121; und
- Fig. 4: die Filtereinheit 1 von Fig. 3 mit acht rippenförmigen Distanzelementen 121, die konzentrisch und radial zur Eingangsleitung 14 bzw. zur Eingangsöffnung 120 des Gehäusebodens 12 angeordnet sind.

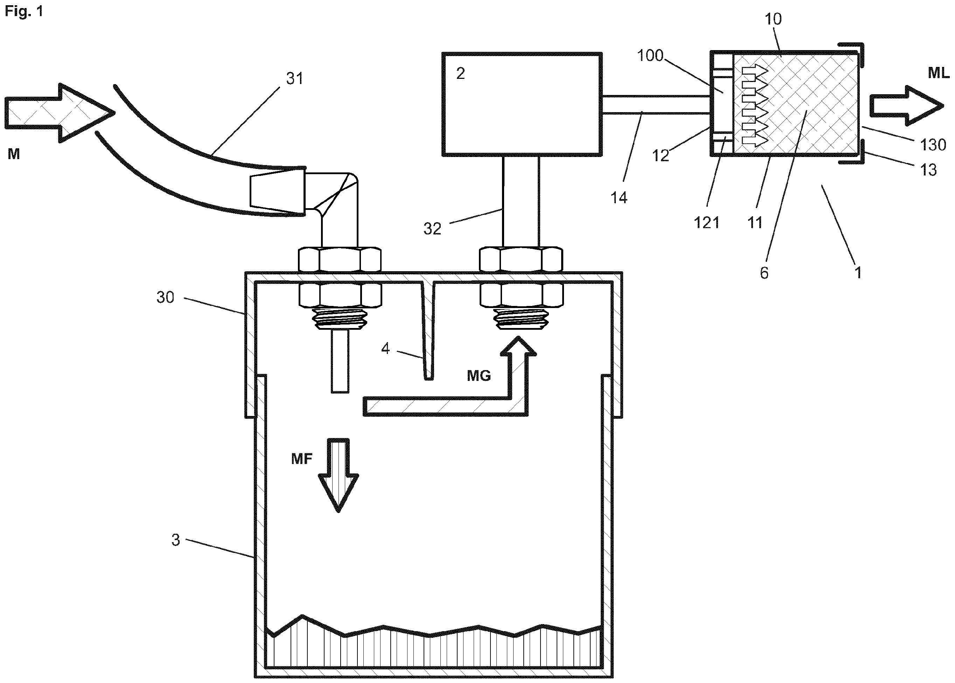

Fig. 1 zeigt eine erfindungsgemässe Saugvorrichtung mit einem Behälter 3, der einerseits mit einer vom Anwender bedienten Absaugleitung 31 und andererseits mit einer Ansaugleitung 32 verbunden ist, die an eine mit einer Filtereinheit 1 verbundene Saugeinheit 2 angeschlossen ist. Durch die Saugeinheit 2 wird über die Ansaugleitung 32 ein Unterdruck im Behälter 3 erzeugt, der seinerseits eine Absaugwirkung bzw. ein Medienstrom in der Absaugleitung 31 erzeugt.

Die Absaugleitung 31 ist endseitig z.B. mit einer Kanüle verbunden, mittels der z.B. bei einem medizinischen Eingriff Flüssigkeit und Feststoffpartikel aus einem Operationsfeld abgesaugt werden können. Das abgesaugte Medium M wird im Behälter 3 in eine flüssige Komponente MF und in eine gasförmige Komponente MG aufgetrennt. Die Absaugleitung 31 und die Ansaugleitung 32 sind mit einer Abdeckung 30 des Behälters 3 verbunden, welcher ein Trennelement 4 aufweist, das als zusätzliche Barriere für die flüssige Komponente MF dient.

Die flüssige Komponente MF verbleibt im Behälter 3 und die gasförmige Komponente MG wird durch die Ansaugleitung 32, die Saugeinheit 2 und eine Eingangsleitung 14 zu einer erfindungsgemässen Filtereinheit 1 geführt.

In der gasförmigen Komponente MG verbliebene Partikel, welche die Raumhygiene und die Gesundheit der anwesenden Personen beeinträchtigen könnten, werden in der Filtereinheit 1 gefangen, sodass aus der Filtereinheit 1 ein Medienstroms ML austritt, welcher die Raumhygiene nicht beeinträchtigt.

Fig. 1 zeigt die Filtereinheit 1 in schematischer Ausgestaltung mit einem Filtergehäuse 11, welches einen Aufnahmeraum 10 umschliesst, in dem ein Filterelement 6 gehalten ist.

Es ist ersichtlich, dass zwischen dem Gehäuseboden 12 und der Eingangsseite des Filterelements 6 Distanzelemente 121 vorgesehen sind, durch die das Filterelement 6 beabstandet vom Gehäuseboden 12 gehalten ist. Zwischen dem Gehäuseboden 12 und der Eingangsseite des Filterelements 6 resultiert somit ein Diffusionsraum 100, innerhalb dessen sich das einströmende gasförmige Medium MG verteilen kann. Der Diffusionsraum 100 ist überproportional gross gezeichnet und erfordert grundsätzlich nur eine Grösse, welche die gleichmässige Verteilung des einströmenden Mediums MG erlaubt. Der Diffusionsraum 100 hat somit einen Querschnitt, welcher zumindest annähernd dem Querschnitt des Aufnahmeraums 10 oder dem Querschnitt des Filterelements 6 entspricht, dessen Höhe oder Länge jedoch auf ein Minimum reduziert werden kann, soweit die homogene Diffusion des einströmenden Mediums MG über den gesamten Querschnitt des Filterelements 6 gewährleistet ist.

Mit Pfeilen ist symbolisch gezeigt, dass das gasförmige Medium MG über den gesamten Querschnitt des Filterelements 6 gleichmässig verteilt in dieses Eintritt. Die Eingangsseite des Filterelements 6 wird dadurch gleichmässig mit dem gasförmigen Medium MG beaufschlagt, welches das Filterelement 6 von der Eingangsseite bis zur Ausgangsseite über den gesamten Querschnitt gleichmässig durchströmt.

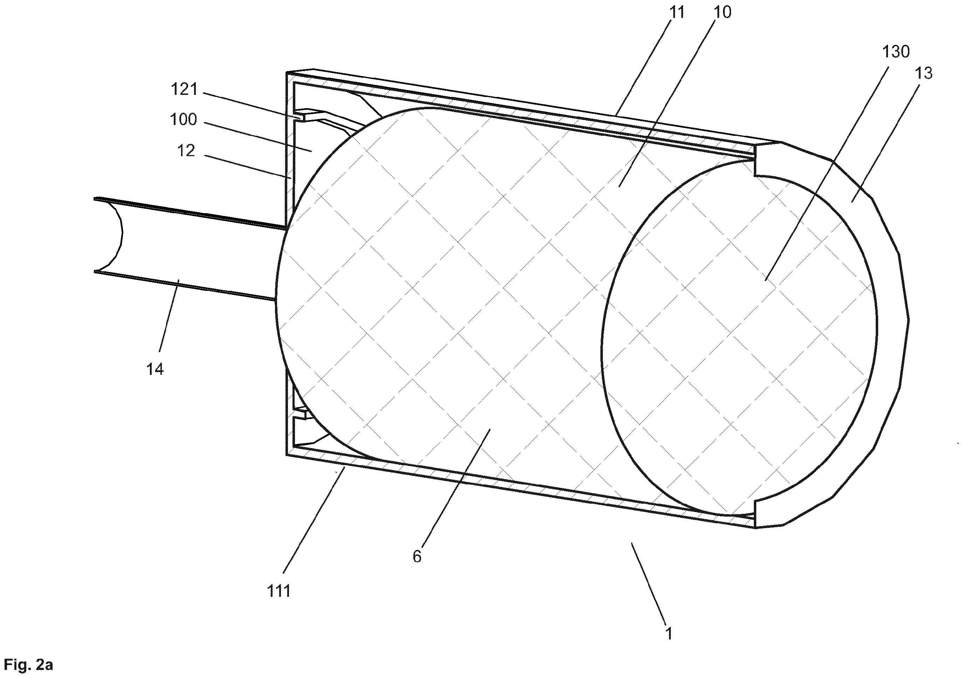

Fig. 2a zeigt die Filtereinheit 1 von Fig. 1 in einem Längsschnitt in einer vorzugsweisen Ausgestaltung. Das Filtergehäuse 11 ist zylindrisch ausgebildet und weist eine relativ dünne Zylinderwand 111 auf, die eingangsseitig einstückig mit dem Gehäuseboden 12 verbunden ist. An den Gehäuseboden 12 ist eingangsseitig koaxial zur Längsachse der Filtereinheit 1 ausgerichtet die Eingangsleitung 14 angeschlossen, über die das zu filternde Medium in die Filtereinheit 1 einführbar ist. Das Filtergehäuse 11 umschliesst den Aufnahmeraum 10, in dem das Filterelement 6 praktisch spielfrei gehalten ist. Das Filterelement 6 liegt an der Zylinderwand 111 an, weshalb das zugeführte Medium ausschliesslich innerhalb des Filterelements 6 die Filtereinheit 1 durchläuft.

Der Gehäuseboden 12 ist mit wenigstens einem Distanzelement 121 verbunden, das in den Aufnahmeraum 100 hineinragt und den Diffusionsraum 10 als Teil des Aufnahmeraumes 100 freihält. Das Filterelement 6 ist auf das Distanzelement 121 abgestützt, weshalb zwischen dem Gehäuseboden 12 und der Eingangsseite des Filterelements 6 der Diffusionsraum 100 offengehalten ist.

Das wenigstens eine Distanzelement 121 ist in der Höhe und/oder Breite und/oder Ausrichtung und/oder Anzahl und/oder Ausformung derart ausgebildet, dass sich das Filterelement 6 auch nach längerem Betrieb der Filtereinheit 1 nicht bis zum Gehäuseboden 12 ausdehnen und den Diffusionsraum 100 ganz oder teilweise verschliessen kann. Ferner ist das wenigstens eine Distanzelement 121 derart schmal, dass von der eingangsseitigen Querschnittsfläche des Filterelements nur ein vernachlässigbar kleiner Teil abgedeckt wird. Das wenigstens eine Distanzelement 121 wird daher vorzugsweise so gross wie notwendig und so klein wie möglich gewählt.

Fig. 2a zeigt ferner, dass ausgangsseitig auf das Filtergehäuse 11 ein Haltering 13 aufgesetzt ist, welcher einen Halteflansch bildet, der das Filterelement 6 in Position hält. Der Haltering 13 umschliesst eine Ringöffnung 130, durch die das gefilterte Medium austreten kann. Der Haltering 13 ist vorzugsweise durch Gewindeelemente oder Rastelemente, die mit Gewindeelementen oder Rastelementen an der Gehäusewand 111 zusammenwirken, lösbar gehalten. Der Haltering 13 kann daher rasch entfernt werden, um das Filterelement 6 auszutauschen.

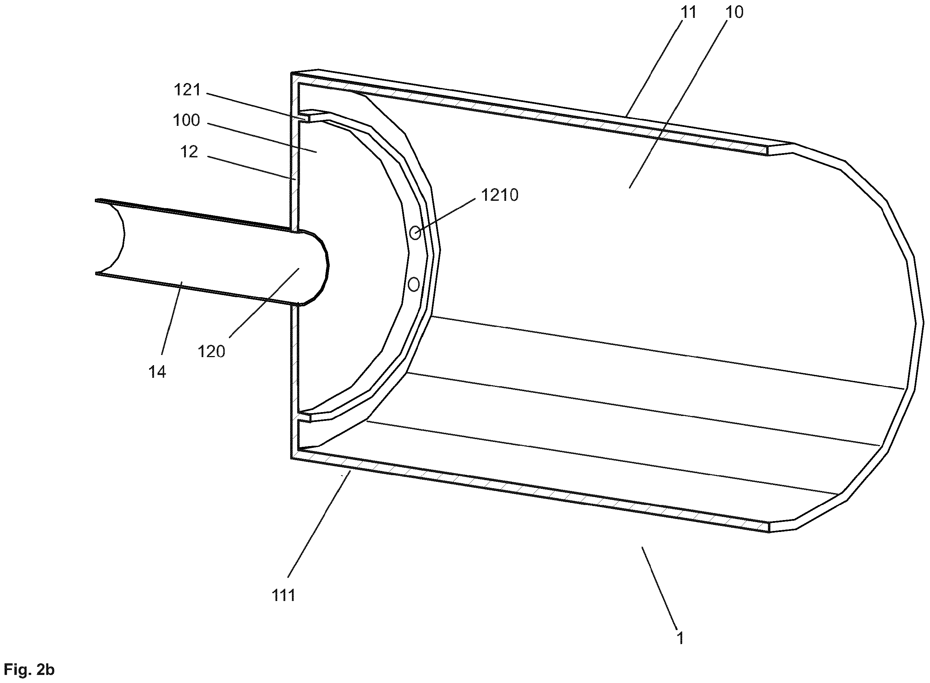

Fig. 2b zeigt die Filtereinheit 1 von Fig. 2a nach Entnahme des Filterelements 6. Es ist ersichtlich, dass das Distanzelement 121 ringförmig ausgebildet ist und die Eingangsöffnung 120, in die die Eingangsleitung 14 einmündet, im Gehäuseboden 12 konzentrisch umschliesst. Symbolisch ist gezeigt, dass das Distanzelement 121 Öffnungen oder Durchbrüche 1210 aufweisen kann, durch die hindurch das zugeführte Medium nach aussen gelangen kann.

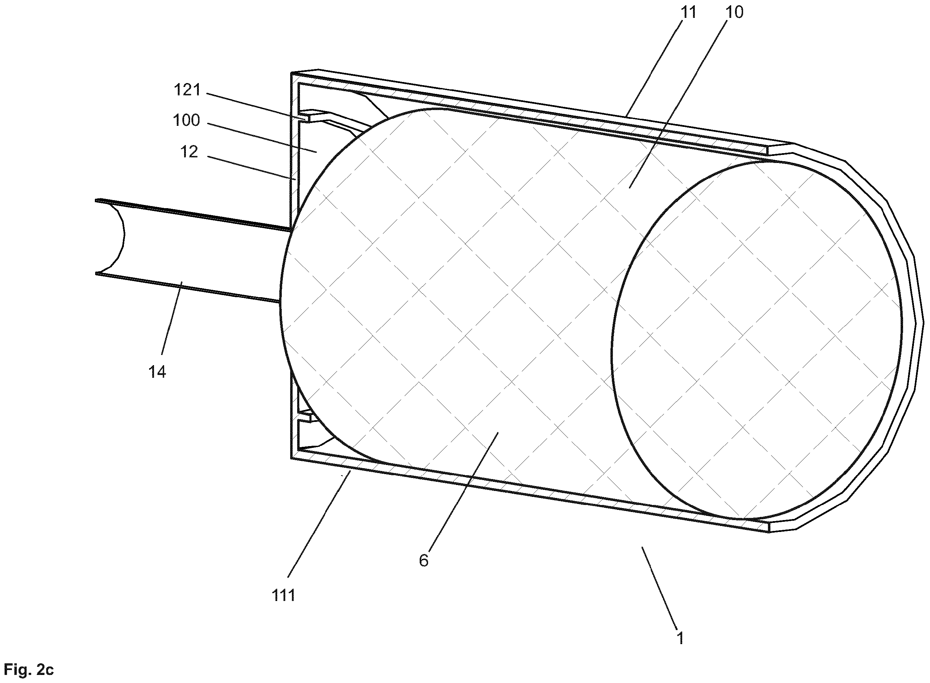

Fig. 2c zeigt die Filtereinheit 1 von Fig. 2a ohne Haltering 13.

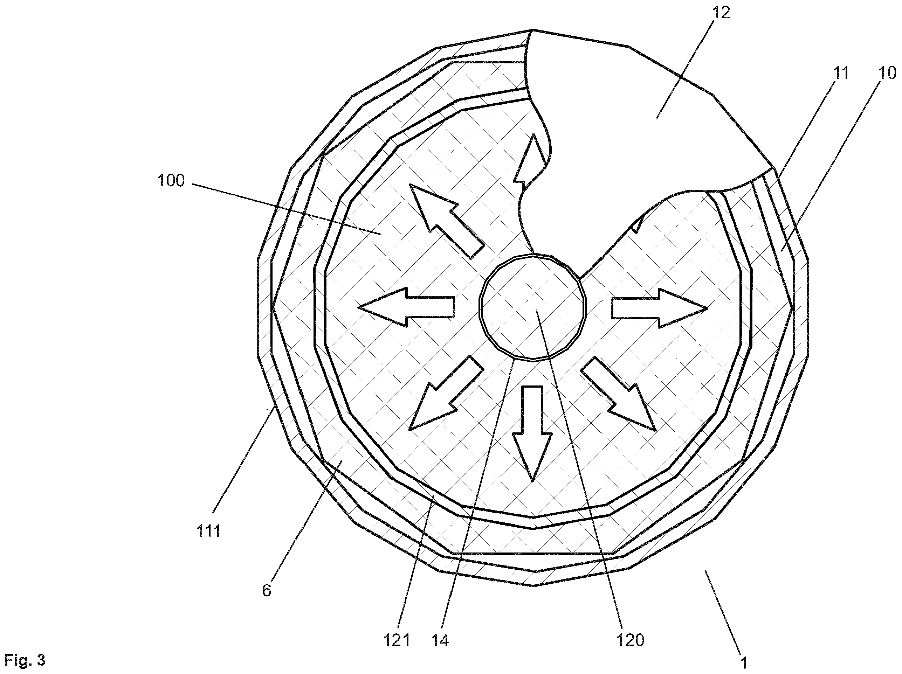

Fig. 3 zeigt die Filtereinheit 1 von Fig. 2a von der Eingangsseite her gesehen mit dem teilweise weggeschnittenen Gehäuseboden 12 und mit dem ringförmigen Distanzelement 121, das konzentrisch zur Eingangsöffnung 120 am Gehäuseboden 12 angeordnet, vorzugsweise angeformt ist. Durch acht Pfeile ist symbolisiert, dass sich das einströmende Medium gleichmässig verteilen kann.

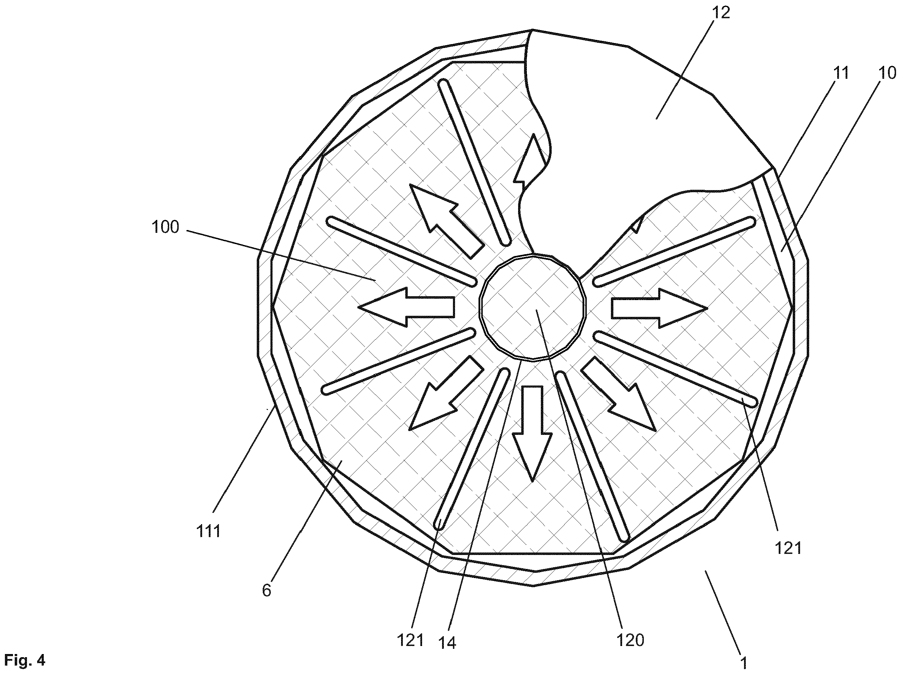

Fig. 4 zeigt die Filtereinheit 1 von Fig. 3 in einer Ausgestaltung, in der das ringförmige Distanzelement 121 von Fig. 3 durch acht rippenförmige Distanzelemente 121 ersetzt wurde. Die Distanzelemente 121 sind in gleichmässigen Abständen konzentrisch und radial zur Eingangsleitung 14 bzw. zur Eingangsöffnung 120 des Gehäusebodens 12 angeordnet. Das einströmende Medium kann sich zwischen den rippenförmigen Distanzelementen 121 ungehindert bis zur Gehäusewand 111 über den gesamten Querschnitt des eingesetzten Filterelements 6 ausbreiten und dieses anschliessend durchströmen. Öffnungen zwischen dem Filterelement 6 und der zylindrischen Gehäusewand 111 können durch einen Dichtungsmittel oder einen Klebstoff verschlossen werden. Vorzugsweise wird jedoch ein Filterelement 6 eingesetzt, dessen Querschnitt etwas grösser ist als der Querschnitt des Aufnahmeraums 10. Das Filterelement 6 wird daher leicht komprimiert und in das Filtergehäuse 11 eingeschoben. Das Filtergehäuse 11 kann auch einen anderen Querschnitt aufweisen, um weitere Filterelemente 6 aufnehmen zu können.

## Patentansprüche

1. Filtereinheit (1) für eine Saugvorrichtung mit einem Filtergehäuse (11), das einen Aufnahmeraum (10) umschliesst, in dem ein Filterelement (6) gehalten ist, und das eingangsseitig einen Gehäuseboden (12) aufweist, an den auf der vom Aufnahmeraum (10) abgewandten Aussenseite eine Eingangsleitung (14) angeschlossen ist, durch die ein zu filterndes Medium (MG) in den Aufnahmeraum (10) einführbar ist, **dadurch gekennzeichnet, dass** auf der dem Aufnahmeraum (10) zugewandten Innenseite des Gehäusebodens (12) wenigstens ein in den Aufnahmeraum (10) hinein ragendes Distanzelement (121) vorgesehen ist, durch das zwischen dem eingesetzten Filterelement (6) und dem Gehäuseboden (12) ein Diffusionsraum (100) freigehalten wird.

2. Filtereinheit (1) nach Anspruch 1, **dadurch gekennzeichnet, dass** das wenigstens eine Distanzelement (121) ringförmig oder spiralförmig ausgebildet ist oder dass mehrere rippenförmige Distanzelemente (121) vorgesehen sind.

3. Filtereinheit (1) nach Anspruch 1 oder 2, **dadurch gekennzeichnet, dass** das wenigstens eine Distanzelement (121) und oder die Distanzelemente (121) konzentrisch zur Längsachse der Filtereinheit (1) oder konzentrisch zur Längsachse des Filterelements (6) angeordnet sind.

4. Filtereinheit (1) nach Anspruch 2 oder 3, **dadurch gekennzeichnet, dass** die rippenförmigen Distanzelemente (121) radial und senkrecht zur Längsachse der Filtereinheit (1) verlaufen und vorzugsweise gleichmässig zueinander beabstandet sind.

5. Filtereinheit (1) nach einem der Ansprüche 1 - 4, **dadurch gekennzeichnet, dass** das Distanzelement (121) oder die Distanzelemente (121) einstückig am Gehäuseboden (12) angeformt sind.

6. Filtereinheit (1) nach einem der Ansprüche 1 - 5, **dadurch gekennzeichnet, dass** die Höhe, mit der das Distanzelement (121) oder die Distanzelemente (121) in den Aufnahmeraum (10) hineinragen, im Bereich von 1 mm - 10 mm liegt.

7. Filtereinheit (1) nach einem der Ansprüche 1 - 6, **dadurch gekennzeichnet, dass** die Höhe, mit der das Distanzelement (121) oder die Distanzelemente (121) in den Aufnahmeraum (10) hineinragen, und die Festigkeit des Filterelements (6) aufeinander abgestimmt sind, sodass der Diffusionsraum (100) bei einer Deformation, gegebenenfalls einem Aufquellen des Filterelements (6) von diesem nicht ausgefüllt wird.

8. Filtereinheit (1) nach einem der Ansprüche 1 - 7, **dadurch gekennzeichnet, dass** die Breite des Distanzelements (121) oder der Distanzelemente (121) um einen Faktor im Bereich von 0.5 - 2.5 grösser oder kleiner gewählt ist als die Höhe des Distanzelements (121) oder der Distanzelemente (121) .

9. Filtereinheit (1) nach einem der Ansprüche 1 - 8, **dadurch gekennzeichnet, dass** das Distanzelement (121) oder die Distanzelemente (121) Durchbrüche oder Öffnungen aufweisen, welche den Durchtritt des gasförmigen Mediums (MG) erlauben.

10. Filtereinheit (1) nach einem der Ansprüche 1 - 9, **dadurch gekennzeichnet, dass** das Filtergehäuse (11) eine Seitenwand (111) oder Seitenwände (111) aufweist, die zur weitgehend spielfreien Aufnahme des Filterelements (6) geeignet sind, das einen polygonalen oder kreisförmigen Querschnitt aufweist.

11. Filtereinheit (1) nach einem der Ansprüche 1 - 10, **dadurch gekennzeichnet, dass** das Filterelement (6) dicht an die Seitenwand (111) oder die Seitenwände (111) anschliesst, sodass das Medium die Filtereinheit (1) innerhalb des Filterelements (6) durchläuft und/oder dass das Filterelement (6) mittels eines Klebstoffs im Filtergehäuse (11) gehalten und abgedichtet ist.

12. Filtereinheit (1) nach einem der Ansprüche 1 - 11, **dadurch gekennzeichnet, dass** das Filtergehäuse (11) ausgangsseitig mit einem vorzugsweise ringförmigen Halteelement (13) lösbar verbunden ist, welches einerseits das Filterelement (6) in Position hält und andererseits das gasförmige Medium (MG) durch eine vom Halteelement (13) zumindest teilweise umschlossene Öffnung (130) passieren lässt.

13. Filtereinheit (1) nach Anspruch 12, **dadurch gekennzeichnet, dass** das Halteelement (13) durch Gewindeelemente oder Rastelemente lösbar mit der Seitenwand (111) oder den Seitenwänden (111) verbunden ist.

14. Saugvorrichtung zum Absaugen von Flüssigkeit und/oder Feststoffpartikeln insbesondere für medizinische Anwendungen mit einer an eine Saugeinheit (2) angeschlossenen Filtereinheit (1) nach einem der Ansprüche 1 - 13.

15. Saugvorrichtung nach Anspruch 14, **dadurch gekennzeichnet, dass** ein Behälter (3) vorgesehen ist, der einerseits mit einer Absaugleitung (31), durch die ein Medium (M) ansaugbar ist, das im Behälter (3) in eine flüssige Komponente (MF) und in eine gasförmige Komponente (MG) aufgeteilt wird, und andererseits mit einer Ansaugleitung (32) verbunden ist, die über eine Saugeinheit (2) mit der Filtereinheit (1) verbunden ist, der die gasförmige Komponente (MG) zuführbar ist.
